# EUROPÄISCHE PATENTSCHRIFT

(11) **EP 1 860 265 B1**
(45) Veröffentlichungstag und Bekanntmachung des Hinweises auf die Patenterteilung: **28.12.2011**
(21) Anmeldenummer: 07010228.0
(22) Anmeldetag: 23.05.2007
(51) Int. Cl.: E05F 15/00

(54) **Steuerungsvorrichtung und Verstellsystem eines Kraftfahrzeuges**
Control device and drive system for a motor vehicle
Dispositif de commande et système d'actionnement pour un véhicule automobile

(30) Priorität: 24.05.2006 DE 202006008465 U
(43) Veröffentlichungstag der Anmeldung: 28.11.2007
(60) Teilanmeldung: 10011961.9
(73) Patentinhaber: Brose Schliesssysteme GmbH & Co. KG, 42369 Wuppertal (DE)
(72) Erfinder: Dünne, Klaus, 42579 Heiligenhaus (DE); Eggeling, Jürgen, 45475 Mühlheim an der Ruhr (DE); Platzköster, Andreas, 82335 Berg (DE)
(74) Vertreter: Gottschald, Jan

(56) Entgegenhaltungen:
- WO-A-01/01556
- WO-A-03/103349
- DE-A1- 19 901 840
- GB-A- 2 186 392

## Beschreibung

Die Erfindung betrifft eine Steuerungsvorrichtung und ein Verstellsystem eines Kraftfahrzeugs.

Aus der DE 37 36 400 A1 ist ein Verstellantrieb bekannt. Bei diesem wird zur Erfüllung einer vorgegebenen Federrate in bestimmten Verstellbereichen zur Herabsetzung der kinematischen Energie eine Drehzahl- bzw. Geschwindigkeitsreduzierung des Antriebs vorgenommen. Das bewegliche Teil wird mittels eines Antriebsmotors über einen gefährdeten Klemmbereich, in dem Fremdkörper zwischen dem beweglichen Teil und einem ruhenden Teil einklemmbar sind, in eine Schließstellung bewegt. Wegen unvermeidlicher Verzögerung bei der Signalverarbeitung und der Trägheit des mechanisch bewegten Teils, kann trotz einer den Einklemmschutz darstellenden Sicherheitsvorrichtung der Fremdkörper zwischen dem bewegten Teil und dem ruhenden Teil eingeklemmt werden.

Um dieses zu vermeiden ist in der DE 37 36 400 A1 vorgesehen, daß die Verstellgeschwindigkeit beim Schließen des beweglichen Teils in dem gefährdeten Klemmbereich verringert wird. Der eigentliche Einklemmschutz kann dann gegebenenfalls das bewegliche Teil augenblicklich anhalten und eventuell die Bewegungsrichtung umkehren (Reversieren). Bei diesem bekannten Verstellantrieb erfolgt die Reduzierung der Geschwindigkeit in Stufen, d. h. es wird von einer hohen Stufe in einem Schritt auf eine niedrige Stufe der Schließgeschwindigkeit umgeschaltet.

In der DE 196 18 484 A1 ist ein Verstellantrieb mit Einklemmschutz offenbart, der einen kontinuierlichen Übergang von einer hohen auf eine bestimmte niedrige Schließgeschwindigkeit aufweist. Innerhalb eines vorgegebenen Bereichs vor Erreichen der "Geschlossen"-Position wird die Drehzahl oder die Leistung des Antriebs nach einem vorgegebenen funktionalen Zusammenhang abgesenkt, so daß die Absenkung auf eine Minimaldrehzahl bzw. Minimalleistung innerhalb eines bestimmten Positionsbereichs erfolgt. Die Minimaldrehzahl bzw. Minimalleistung wird an einer bestimmten Position vor der "Geschlossen"-Position erreicht. Dabei ist die Minimaldrehzahl bzw. Minimalleistung im Wesentlichen konstant. Die Absenkung der Drehzahl oder der Leistung des Antriebs erfolgt linear oder nach einer Exponentialfunktion.

Die Absenkung erfolgt in der DE 196 18 484 A1 nach einem vorgegebenen funktionalen Zusammenhang auf die Minimaldrehzahl bzw. Minimalleistung über einen konstanten Positionsbereich, wobei sich die Absenkungsgeschwindigkeit in Abhängigkeit von der aktuellen Versorgungsleistung, ändert. Oder es erfolgt die Absenkung auf die Minimaldrehzahl bzw. Minimalleistung über einen variablen Positionsbereich, wobei sich dessen Startpunkt in Abhängigkeit von der jeweils aktuellen Versorgungsleistung ändert. Die notwendige Minimaldrehzahl bzw. Minimalleistung wird dabei empirisch derart ermittelt, daß unter allen Bedingungen, wie insbesondere Temperatur und Feuchtigkeit, noch ausreichend hohe Schließkräfte gewährleistet sind.

Die Steuerung der Drehzahl bzw. der Leistung des elektrischen Antriebs erfolgt in der DE 196 18 484 A1 durch Halbleiterbauelemente, wie Linearregler oder Taktregler mit variablem Puls-Pausen-Verhältnis. Der Verstellantrieb ist zusammen mit einer Schaltung für den Schutz gegen Einklemmen von Fremdkörpern zwischen einem bewegten Teil und einem festen Anschlag in der "Geschlossen"-Position einsetzbar. Bei der Berechnung der Drehzahlabsenkung durch Einklemmvorgänge wird die jeweils bekannte Steigung der Absenkung nach einem vorgegebenen funktionalen Zusammenhang von Drehzahl oder Leistung des Antriebs als Korrekturfaktor berücksichtigt. Zur Korrektur ist ein adaptiver Speicher vorgesehen, in welchem die gesteuerte Absenkung von Drehzahl oder Leistung als geringfügige Schwergängigkeit gespeichert ist.

Ein anderer bekannter Einklemmschutz (DE 199 01 840 A1) basiert auf der Vorgabe eines Maximal-Motorstroms, dessen Erreichen über einen ebenfalls vorbestimmten Zeitraum als Einklemmfall erkannt wird.

Bekannt sind auch verschiedene Varianten für die Geschwindigkeitsregelung des Antriebs eines in Rede stehenden Verstellsystems. Ein Beispiel hierfür zeigt die WO 01/01556 A1, wobei hier einer Geschwindigkeitsregelung kurz vor dem Erreichen der Zielposition eine Drehmomentregelung folgt.

Der Erfindung liegt die Aufgabe zu Grunde eine Steuerungsvorrichtung oder ein Verstellsystem derart anzugeben, daß der Einklemmschutz verbessert wird.

Diese Aufgabe wird durch die Steuerungsvorrichtung mit den Merkmalen des Anspruchs 17 oder durch ein Verstellsystem mit den Merkmalen des Anspruchs 1 gelöst. Vorteilhafte Weiterbildungen der Erfindung sind Gegenstand von abhängigen Ansprüchen.

Demzufolge ist eine Steuerungsvorrichtung zum Betrieb eines Verstellsystems eines Kraftfahrzeugs, insbesondere einer Heckklappe vorgesehen. Diese Steuerungsvorrichtung weist eine Recheneinheit auf, die mit Funktionen zur Steuerung des Verstellsystems eingerichtet ist. Diese Funktionen können durch Hardware oder durch einen implementierten Programmablauf realisiert werden. Ebenso wird die Aufgabe durch ein Verstellsystem mit einer derartigen Recheneinheit gelöst, dessen Funktionen ebenfalls entsprechend implementiert sind.

Das Verstellsystem weist einen Antrieb zur Verstellung eines Verstellteils, einen Treiber, der zur Bestromung des Antriebs mit dem Antrieb verbunden ist, und einen Sensor zur Messung einer Istgeschwindigkeit des Antriebs auf. Der Antrieb, der Treiber und der Sensor sind dabei vorzugsweise ein Teil eines elektrischen Schaltkreises der Steuerungsvorrichtung. Weiterhin ist die Recheneinheit mit dem Treiber und mit dem Sensor verbunden.

Vorschlagsgemäß ist es vorgesehen, daß eine Verstellbewegung eines Verstellteils geregelt wird, zur Regelung eine Istgeschwindigkeit gemessen und mit einer Sollgeschwindigkeit verglichen wird und die Sollgeschwindigkeit von einer Startposition zu einer Zielposition durch eine Sollfunktion mit einer Anzahl von Verstellphasen bestimmt wird.

Es ist vorgesehen, daß während der Regelung in Abhängigkeit von einer von der Verstellbewegung abhängigen Meßgröße und/oder einer Regelgröße der Regelung ein Einklemmfall ermittelt wird. Zur Ermittlung des Einklemmfalls werden dabei zumindest zwei Algorithmen verwendet. Innerhalb zumindest einer Verstellphase wird einer der zumindest zwei Algorithmen unempfindlicher gesetzt. Um einen Algorithmus unempfindlicher zu setzen, könnte beispielsweise ein Parameter des Algorithmus verändert werden.

Gemäß einer besonders bevorzugten Weiterbildung der Erfindung ist vorgesehen, daß die zumindest zwei Algorithmen innerhalb zumindest einer Verstellphase eine unterschiedliche Selektivität zwischen einer Einklemmkraft und einer Störkraft aufweisen. Eine Störkraft kann beispielsweise durch eine Schwergängigkeit oder durch dynamische Kräfte des Systems verursacht werden. Das Auftreten dieser Störkraft stellt jedoch keinen Einklemmfall dar. Wird von der Recheneinheit diese Störkraft fälschlicherweise als Einklemmfall interpretiert, wird die eigentlich gewünschte Verstellbewegung angehalten oder die Verstellrichtung umgekehrt (Fehlxeversieren). Wird der diesbezügliche Algorithmus unempfindlicher geschaltet, wird auch die Einklemmkraft erhöht. Daher ist eine hohe Sensitivität für eine Einklemmkraft bei gleichzeitiger geringer Sensitivität für eine Störkraft gefordert. Das Verhältnis dieser Sensitivitäten kann als Selektivität bezeichnet werden. Bevorzugt wird derjenige der Algorithmen mit der kleineren Selektivität unempfindlicher im Verhältnis zu dem Algorithmus mit der größeren Selektivität gesetzt.

Gemäß einer vorteilhaften Ausgestaltung wird zur Setzung der Unempfindlichkeit der entsprechende Algorithmus mit der kleineren Selektivität innerhalb der Verstellphase deaktiviert. Hierdurch kann Rechenleistung der Recheneinheit eingespart werden.

Zudem ist es vorteilhafterweise möglich, die Selektivität eines Algorithmus zu optimieren. Hierzu ist vorzugsweise vorgesehen, daß die Selektivität einer der zwei Algorithmen innerhalb einer Verstellphase der Sollfunktion durch Einstellung einer Anzahl von Parametern maximiert wird. Hierbei wird beispielsweise eine Dynamik des Systems bei einer Beschleunigung oder Abbremsung berücksichtigt. In Ausgestaltungen ist vorgesehen, daß das Unempfindlichsetzen bezüglich einer Verstellphase oder verstellpositionsabhängig erfolgt.

Gemäß einer Erfindungsvariante ist zur Realisierung der Funktionen die Recheneinheit eingerichtet
- eine Verstellbewegung eines Verstellteils zu regeln,
- zur Regelung die Istgeschwindigkeit mit einer Sollgeschwindigkeit zu vergleichen,
- die Sollgeschwindigkeit von einer Startposition zu einer Zielposition durch eine Sollfunktion mit einer Anzahl von Verstellphasen mit unterschiedlicher Sollgeschwindigkeit oder mit unterschiedlichem Verlauf der Sollgeschwindigkeit zu bestimmen, und
- die Sollgeschwindigkeit oder den Verlauf der Sollgeschwindigkeit innerhalb mindestens einer Verstellphase in Abhängigkeit von der Startposition und/oder der Zielposition zu bestimmen.

Für die Funktionen kann beispielsweise ein Verfahren zum Betrieb eines Verstellsystems genutzt werden, das durch Schaltvorgänge einer Hardware (ROM, FPGA) oder durch eine Software in der Recheneinheit implementiert ist.

Das Verstellteil ist beispielsweise eine Heckklappe, die durch den Antrieb motorisch verstellbar ist. Zur Regelung der Verstellbewegung des Verstellteils ist vorzugsweise ein Regler mit integralem Verhalten (PI-Regler, PID-Regler) implementiert. Der Regler weist dabei zumindest eine Regelschleife auf, innerhalb derer die Istgeschwindigkeit gemessen und eine Sollgeschwindigkeit vorgebbar ist. Die Sollgeschwindigkeit ist dabei eine Funktion, die von der Startposition und der Zielposition einer jeden Verstellbewegung abhängig ist. Beginnt die Verstellposition beispielsweise in der Mitte des Verstellweges ist die Funktion der Sollgeschwindigkeit von dieser Startposition in der Mitte und von der voraussichtlichen Zielposition - beispielsweise eine geschlossene Position oder eine vollständig geöffnete Position - entsprechend der angewählten Verstellrichtung abhängig. Für kurze mögliche Verstellwege ist beispielsweise eine Sollfunktion mit geringer Sollgeschwindigkeit vorgesehen. Ebenfalls ist es möglich zusätzlich eine Beschleunigung und/oder eine Abbremsung als Verlauf der Sollgeschwindigkeit in der Sollfunktion in Abhängigkeit von der Startposition und/oder der Zielposition zu verändern. Verschiedene Verstellphasen der Sollfunktion weisen dabei unterschiedliche Verläufe auf, wobei beispielsweise zumindest eine Verstellphase zur Beschleunigung und zumindest eine Verstellphase zur Abbremsung vorsehen ist.

Gemäß einer vorteilhaften Ausgestaltung der Erfindung ist vorgesehen, daß der Verlauf der Sollgeschwindigkeit verstellpositionsabhängig und/oder verstellzeitabhängig ist. Beispielsweise kann eine Beschleunigungsphase auf eine halbe Sekunde und eine Abbremsphase auf 10 cm Verstellweg des Verstellteils eingestellt sein.

In einer bevorzugten Ausgestaltung ist vorgesehen, daß die Sollfunktion in Folge eine Beschleunigungsphase, eine an die Beschleunigungsphase anschließenden Gleichlaufphase, eine an die Gleichlaufphase anschließenden Abbremsphase und eine an die Abbremsphase anschließenden Langsamlaufphase aufweist. Diese Phasen können dabei noch weiter unterteilt werden, indem beispielsweise die Gleichlaufphase in unterschiedliche Teile mit unterschiedlichen auf das Verstellsystem wirkenden physikalischen Einflüssen unterteilt wird. Vorzugsweise schließen die Phasen einander unmittelbar an. In einer alternativen Ausgestaltung sind weitere Zwischenphasen vorgesehen, so daß sich die Beschleunigungsphase, die Gleichlaufphase, die Abbremsphase und die Langsamlaufphase nicht unmittelbar einander anschließen.

In einer vorteilhaften Ausgestaltung wird die Sollfunktion mit einer Ausgleichsphase bestimmt, wobei in der Ausgleichsphase eine Änderung einer durch zumindest einen mechanischen Energiespeicher dem Verstellsystem zugeführte oder entzogene Energie im Verlauf der Sollgeschwindigkeit, insbesondere für eine gleichmäßige Istgeschwindigkeit ausgleichend, berücksichtigt wird. Ein derartiger Energiespeicher ist beispielsweise ein Federsystem aus einer oder mehrerer Federn, wie Spiralfeder, Blattfedern oder Druckluftfedern. Eine weitere mögliche Energie kann als potentielle Energie durch die Erdanziehungskraft gespeichert sein.

In einer vorteilhaften Weiterbildung ist vorgesehen, daß die Sollgeschwindigkeit zumindest einer Verstellphase und/oder der Verlauf der Sollgeschwindigkeit zumindest einer Verstellphase und/oder die Sollfunktion in Abhängigkeit von einer zum Zustand des Verstellsystems korrelierenden Größe, insbesondere einer aktuellen Temperatur des Verstellsystems, einer Versorgungsspannung, einer Verstelldauer oder einer Sensierung einer Hanglage des Kraftfahrzeugs, bestimmt wird. Die Sollfunktion wird beispielsweise derart angepaßt, daß eine Regelreserve erhalten bleibt. Beispielsweise führt eine Hanglage eines Kraftfahrzeugs zu einer signifikanten Gewichtskraft einer Schiebetür, die entgegen der Schwerkraft geschlossen wird. In diesem Fall wird die Sollgeschwindigkeit und damit natürlich auch die Verstellgeschwindigkeit reduziert um eine Regelreserve von beispielsweise 5 % zu behalten, die zur Ausregelung von lokaler Schwergängigkeit genutzt werden.

Eine weitere, auch kombinierbare Erfindungsvariante sieht ebenfalls vor, daß eine Verstellbewegung eines Verstellteils geregelt wird, zur Regelung eine Istgeschwindigkeit gemessen und mit einer Sollgeschwindigkeit verglichen wird und die Sollgeschwindigkeit von einer Startposition zu einer Zielposition durch eine Sollfunktion mit einer Anzahl von Verstellphasen bestimmt wird.

Gemäß dieser weiteren Erfindungsvariante ist als Verstellphase eine Abbremsphase vorgesehen, innerhalb derer die Sollfunktion als fallende Funktion hin zu einer Minimalsollgeschwindigkeit bestimmt wird. Die Minimalsollgeschwindigkeit ist dabei ein Teil der Sollfunktion. Die Minimalsollgeschwindigkeit ist beispielsweise eine der Verstellphasen und kann auch als Langsamlaufphase bezeichnet werden.

Die Steuerungsvorrichtung des Verstellsystems ist dabei derart eingerichtet, daß die fallende Funktion der Abbremsphase in Abhängigkeit von einem zu mechanischen Schwingungen neigenden Feder-Masse-Systems des Verstellsystems und einer Sollgeschwindigkeit zu Beginn der Abbremsphase derart bestimmt wird, daß durch die fallende Funktion der Abbremsphase ein Überschwingen des Feder-Masse-Systems derart bedämpft wird, daß vor der Zielposition die Istgeschwindigkeit die Minimalgeschwindigkeit erreicht. Das Feder-Masse-System ist beispielsweise eine Heckklappe, die eine Elastizität als Feder und einen Aufbau aus Karosserie, Schloß, Scheibe etc. als Masse aufweist.

In einer bevorzugten Weiterbildung ist vorgesehen, daß die Steilheit der Funktion der Abbremsphase in Abhängigkeit von der Sollgeschwindigkeit zu Beginn der Abbremsphase bestimmt wird, indem für eine höhere Sollgeschwindigkeit eine geringere Steilheit der Funktion und für eine geringere Sollgeschwindigkeit eine höhere Steilheit der Funktion bestimmt wird.

Gemäß einer vorteilhaften Ausgestaltung ist vorgesehen, daß zumindest eine auf das Feder-Masse-System wirkende Kraft verstellpositionsabhängig veränderlich ist. Diese Kraft kann beispielsweise durch ein Federsystem erzeugt werden, daß zusammen mit einer Gewichtskraft einen Kipppunkt aufweist. In diesem Kipppunkt ändert sich die Richtung der wirkenden Kraft bezüglich der Verstellrichtung. Eine andere wirkende Kraft ist beispielsweise eine Dichtkraft, die in einer Verstellposition beim Auftreffen des Verstellteils auf eine Dichtung erzeugt wird. Vorzugsweise wird die fallende Funktion in der Abbremsphase in Abhängigkeit von zumindest einer Verstellposition dieser fallenden Funktion bestimmt.

In einer weiteren, auch kombinierbaren Erfindungsvariante ist ebenfalls vorgesehen, daß eine Verstellbewegung eines Verstellteils geregelt wird, zur Regelung eine Istgeschwindigkeit gemessen und mit einer Sollgeschwindigkeit verglichen wird und die Sollgeschwindigkeit von einer Startposition zu einer Zielposition durch eine Sollfunktion mit einer Anzahl von Verstellphasen bestimmt wird.

In dieser weiteren Erfindungsvariante ist als Verstellphase eine BeschJeunigungsphase vorgesehen, innerhalb derer die Sollfunktion als steigende Funktion hin zu einer Gleichlaufgeschwindigkeit bestimmt wird. Die steigende Funktion der Beschleunigungsphase wird in Abhängigkeit von einem zu mechanischen Schwingungen neigenden Feder-Masse-Systems des Verstellsystems und einer Sollgeschwindigkeit zu Beginn der Beschleunigungsphase derart bestimmt, daß durch die steigende Funktion der Beschleunigungsphase ein Überschwingen des Feder-Masse-Systems bedämpft wird, so daß vorzugsweise Schwingungen des Verstellteils durch das Auge nicht wahrnehmbar sind.

Gemäß einer bevorzugten Weiterbildung ist vorgesehen, daß während der Regelung in Abhängigkeit von der Istgeschwindigkeit ein Einklemmfall ermittelt wird. Der Einklemmfall wird dabei vorzugsweise aus einer zeitlichen oder örtlichen Änderung der Istgeschwindigkeit errechnet, die zu einer Kraftänderung am eingeklemmten Objekt korreliert.

In einer weiteren, auch kombinierbaren Erfindungsvariante ist ebenfalls vorgesehen, daß eine Verstellbewegung eines Verstellteils geregelt wird, zur Regelung eine Istgeschwindigkeit gemessen und mit einer Sollgeschwindigkeit verglichen wird. Dabei kann optional die Sollgeschwindigkeit von einer Startposition zu einer Zielposition durch eine Sollfunktion mit einer Anzahl von Verstellphasen bestimmt werden.

Gemäß dieser weiteren Erfindungsvariante wird die Istgeschwindigkeit mit einer Schwellgeschwindigkeit verglichen. Wenn die Istgeschwindigkeit die Schwellgeschwindigkeit unterschreitet, wird eine Stellgröße der Regelung integriert, die zu einer zum Motor zugeführten Leistung zugeordnet ist. Wenn das Integral der Stellgröße einen Integralschwellwert überschreitet, wird der Motor gestoppt oder seine Verstellrichtung umgekehrt.

Bevorzugt erfolgt während der Integration keine Auswertung der Istgeschwindigkeit. Die Erkennung des Einklemmfalles erfolgt dabei vorteilhafterweise ausschließlich anhand der Auswertung des Integralwertes.

Gemäß einer vorteilhaften Weiterbildung wird die Schwellgeschwindigkeit in Abhängigkeit von einer zum Zustand des Verstellsystems korrelierenden Größe verändert. Diese Größe ist beispielsweise eine Temperatur, eine Versorgungsspannung, eine Federsteifigkeit einer Verstellmechanik des Verstellsystems oder eine Sollgeschwindigkeit.

Sämtliche Erfindungsvarianten können weitergebildet werden, indem ein Regelparameter der Regelung in Abhängigkeit von der jeweiligen Verstellphase und/oder von der Sollgeschwindigkeit und/oder dem Verlauf der Sollgeschwindigkeit bestimmt wird. Eine andere variantenübergreifende Weiterbildung sieht eine Positionssensierung vor. Zur Positionssensierung wird beispielsweise eine Sensierung einer Rastung in einer Schloßraste zusätzlich ausgewertet.

Es wurde oben erläutert, daß die Sollgeschwindigkeit in Abhängigkeit von einer zum Zustand des Verstellsystems korrelierenden Größe, insbesondere einer aktuellen Temperatur, einer Versorgungsspannung, einer Verstelldauer oder einer Hanglange des Kraftfahrzeugs so angepaßt werden kann, daß stets eine Regelreserve erhalten bleibt. Diese Überlegung als solche ist Gegenstand einer weiteren eigenständigen Lehre, bei der es auf die oben beschriebene Realisierung mehrerer Verstellphasen nicht unbedingt ankommt.

Wesentlich ist nach dieser weiteren Lehre, daß mindestens eine zum Zustand des Verstellsystems korrelierende Größe gemessen wird und daß die Sollgeschwindigkeit in Abhängigkeit von der gemessenen Größe bzw. von den gemessenen Größen derart angepaßt wird, daß stets eine Regelreserve verbleibt.

Besonders vorteilhaft ist die obige Gewährleistung einer Regelreserve bei der Ermittlung eines Einklemmfalls während der Regelung in Abhängigkeit von einer von der Verstellbewegung abhängigen Meßgröße, vorzugsweise der Istgeschwindigkeit, und/oder einer Regelgröße der Regelung, Dabei ist die Ermittlung des Einklemmfalls besonders einfach, wenn man davon ausgeht, daß im Normalfall die jeweils vorgegebene Sollgeschwindigkeit vom Antrieb tatsächlich erreichbar ist.

Wenn man also davon ausgehen kann, daß Umgebungsgrößen wie Temperatur, Versorgungsspannung oder Hanglage des Kraftfahrzeugs die Erreichbarkeit der Sollgeschwindigkeit nicht gefährden, so resultiert daraus, daß eine Regelabweichung mit hoher Wahrscheinlichkeit auf einen Einklemmfall zurückgeht. Dabei wird natürlich davon ausgegangen, daß die obigen Umgebungsgrößen die wesentlichen den Betrieb des Verstellsystems beeinflussenden Größen sind.

Die obige Annahme der Erreichbarkeit der Sollgeschwindigkeit läßt sich nur dann rechtfertigen, wenn stets eine Regelreserve verbleibt. Es reicht aus, daß diese Regelreserve minimal ist. Es ist lediglich dafür zu sorgen, daß die Regelung nicht übersteuert ist. Bei einem solchen Übersteuern der Regelung ist der Antrieb nicht mehr in der Lage, die Sollgeschwindigkeit zu erreichen, so daß - mit oder ohne Einklemmfall - stets eine Regelabweichung verbleibt. Eine auf einer Regelabweichung basierende Erkennung eines Einklemmfalls funktioniert dann selbstredend nicht.

Nach dieser weiteren Lehre ist erkannt worden, daß die Gewährleistung einer Regelreserve nicht notwendigerweise mit der Erhöhung der Antriebsleistung verbunden ist. Die gewünschte Regelreserve läßt sich schlicht dadurch realisieren, daß die Sollgeschwindigkeit entsprechend angepaßt, in der Regel herabgesetzt, wird.

Im Folgenden wird die Erfindung anhand von Ausführungsbeispielen in zeichnerischen Darstellungen näher erläutert.

Dabei zeigen
- Fig. 1: ein schematisches Diagramm mit einer Sollfunktion mit mehre- ren Verstellphasen,
- Fig. 2a: ein schematisches Diagramm einer von einem Motor bewirkten Verstellkraft für einen Schließfall, und
- Fig. 2b: ein schematisches Diagramm einer von einem Motor bewirkten Verstellkraft für einen Einklemmfall.

Zur Steuerung von Kraftfahrzeugverstelleinrichtungen wie beispielsweise Heckklappen oder Kofferraumdeckel oder Seitentüren oder Schiebetüren wird eine elektronische Steuerungsvorrichtung verwendet, die eine Recheneinheit mit weiterer Elektronik, wie beispielsweise Treiber oder Sensoren, zur Steuerung der Funktionen der Verstelleinrichtung aufweist. Die Recheneinheit ist dabei für die Funktionen beispielsweise mittels eines fest implementierten oder programmierbaren Steuerungsablaufs eingerichtet. Dieser Ablauf kann beispielsweise mittels einer Software realisiert werden, die Verfahrensschritte rechentechnisch durchführt. Alternativ kann auch eine Digital- und/oder Analogrecheneinheit mit einem Hardware-implementierten Ablauf vorgesehen sein. In dem Ablauf werden Eingangssignale, beispielsweise von Sensoren oder Eingabegeräten, ausgewertet. Zur Auswertung werden weiterhin Parameter verwendet, die in einem Speicher applikationsspezifisch programmierbar oder aus Meßwerten berechenbar sind. In Abhängigkeit von physikalischen Randbedingungen können die Parameter auch empirisch ermittelt werden.

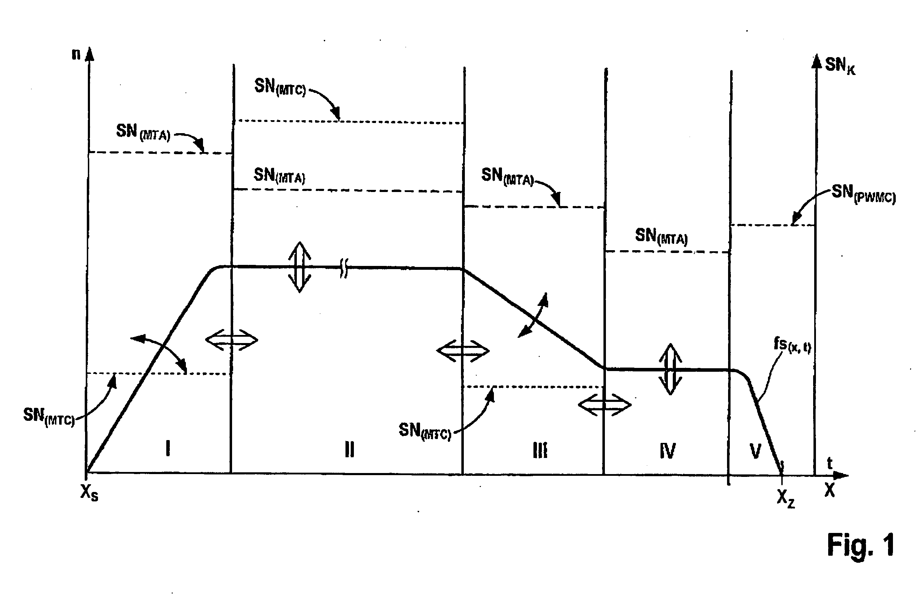

Fig. 1 zeigt ein schematisches Diagramm, anhand dessen die Funktionalität einer in der Recheneinheit implementierten Regelung näher erläutert wird. Die Regelung durch die Recheneinheit soll bewirken, daß die meßbare Istgeschwindigkeit durch eine Steuerung der dem Motor zugeführten Energie einer gewünschten Sollgeschwindigkeit angenähert wird. Hierzu wird beispielsweise ein PI-Regler (Proportional-Integral-Regler) oder ein PID-Regler (Proportional-Integral-Difrerential-Regler) in der Recheneinheit implementiert. Die gewünschte Sollgeschwindigkeit ist dabei verstellpositionsabhängig und/oder verstellzeitabhängig und in Fig. 1 als Sollfunktion fₓ(x,t) mittels einer durchgezogenen Linie dargestellt.

Verschiedene Abschnitte der Sollfunktion fₓ(x,t) sind im Ausführungsbeispiel der Fig. 1 fünf Verstellphasen I, II, III, IV und V zugeordnet. Die erste Verstellphase I ist dabei eine Beschleunigungsphase, die eine steigende Funktion als Sollfunktion fₓ(x,t) aufweist. Die zweite Verstellphase II ist eine Gleichlaufphase, die eine konstante Sollgeschwindigkeit als Sollfunktion fₓ(x,t) aufweist. Die dritte Verstellphase III ist eine Abbremsphase, die eine fallende Funktion als Sollfunktion fₓ(x,t) aufweist. Die vierte Verstellphase IV ist eine Langsamlaufphase, die eine konstante Sollgeschwindigkeit als Sollfunktion fₓ(x,t) aufweist, wobei die Sollgeschwindigkeit in der Langsamlaufphase IV kleiner ist als in der Gleichlaufphase II und beispielsweise nur ein Drittel beträgt. Die fünfte Phase V ist eine Stoppphase, in der ein zu verstellendes Verstellteil seine Zielposition erreicht. In dieser Stoppphase V fällt die Sollfunktion fₓ(x,t) beispielsweise auf den Wert Null.

Die Sollfunktion fₓ(x,t) ist dabei in jeder Verstellphase durch die Recheneinheit dynamisch veränderbar. Diese Veränderbarkeit ist in Fig. 1 durch Pfeile angedeutet. So kann in der ersten Verstellphase I die Steigung einer Rampenfunktion als Sollfunktion fₓ(x,t) in der Steilheit durch die Recheneinheit verändert werden. Ebenfalls ist es möglich den Verstellweg und damit auch die Dauer der ersten Verstellphase I zu verändern. Analog kann in der dritten Verstellphase III eine negative Steigung einer Rampe als Sollfunktion fₓ(x,t) und/oder ein den Beginn und das Ende der dritten Verstellphase festlegender Verstellweg durch die Recheneinheit verändert werden. In den Verstellphasen II und IV kann jeweils der Absolut- oder Relativwert der Sollgeschwindigkeit und/oder ein der jeweiligen Verstellphase II, IV zugeordneter Verstellweg durch die Recheneinheit verändert werden. Die Recheneinheit ist daher eingerichtet die Sollfunktion fₓ(x,t) beliebig auszubilden.

Dabei ist die Erfindung nicht auf die in Fig. 1 dargestellte Sollfunktion fₓ(x,t) begrenzt. Die Recheneinheit kann mittels der Ausbildung der Sollfunktion fₓ(x,t) beliebige physikalische Einflüsse auf das Verstellsystem berücksichtigen und gegebenenfalls ausgleichen. Im Ausführungsbeispiel der Fig. 1 sind die möglichen Veränderungen der Sollfunktion fₓ(x,t) von einer Startposition xₛ und/oder einer Zielposition x_{z} abhängig. Ist beispielsweise die Zielposition x_{z} eine Verstellposition, in der eine Heckklappe geöffnet ist und die Startposition xₛ eine Verstellposition, in der die Heckklappe geschlossen ist, werden zur Bestimmung der Sollfunktion fₓ(x,t) die beim Öffnungsvorgang wirkenden äußeren Kräfte, wie die wirkende Gewichtskraft der Heckklappe berücksichtigt. Ist hingegen die Zielposition eine Verstellposition in der die Heckklappe geschlossen ist und wird die Heckklappe aus einer mittleren Verstellposition als Startposition xₛ in diese Zielposition x_{z} verfahren, wirken andere Kräfte oder Kraftrichtungen im Verstellsystem. Demzufolge ist die Sollfunktion fₓ(x,t) dann diesen anderen Kräften oder Kraftrichtungen angepaßt.

Ein Vorteil der Anpassung der Sollfunktion fₓ(x,t) ist, daß mechanische Schwingungen bedämpft werden und für das menschliche Auge nicht mehr wahrnehmbar sind. Mechanische Schwingungen können immer dann auftreten, wenn ein Feder-Masse-System der Mechanik angeregt wird und die mechanische Dämpfung zu gering ist. Ein derartiges System neigt zu Schwingungen, die durch die Anpassung der Sollfunktion fₓ(x,t) reduziert werden. Weiterhin ist alternativ oder in Kombination auch eine Veränderung der Sollfunktion fₓ(x,t) in Abhängigkeit von anderen Systemgrößen möglich. Beispielsweise wird die Sollfunktion fₓ(x,t) derart angepaßt, daß bei einer niedrigen Versorgungsspannung die Sollgeschwindigkeit in der Gleichlaufphase II reduziert wird, um eine so genannte Regelreserve zu behalten. Entsprechend werden zumindest die Verstellphasen I und III angepaßt.

Bei einem in Fig. 1 ebenfalls dargestellten Ausführungsbeispiel, das auch mit der Veränderung der Sollfunktion fₓ(x,t) kombiniert werden kann, ist die Recheneinheit eingerichtet ein Einklemmen eines Gegenstandes oder Körperteils während eines Schließvorgangs zu detektieren. Wird beispielsweise die Heckklappe geschlossen, so ermittelt die Recheneinheit aus zumindest einer Meßgröße, wie beispielsweise der Drehzahl n eines Antriebsmotors des Verstellsystems, und/oder einer Regelgröße, wie zum Beispiel das Stellsignal einer Puls-Weiten-Modulation eines Motorstroms, mittels einer Anzahl von Algorithmen, ob ein Einklemmfall vorliegt. Im Ausführungsbeispiel der Fig. 1 werden drei unterschiedliche Algorithmen verwendet. Werden mehrere Sensorsignale ausgewertet kann auch eine höhere Anzahl von Algorithmen vorteilhaft sein.

Aufgrund eines Zusammenhangs der Algorithmen mit unterschiedlichen physikalischen Effekten im Verstellsystem weisen diese Algorithmen eine unterschiedliche Empfindlichkeit auf, deren Empfindlichkeit zudem von einer Verstellsituation wie einer Beschleunigung, einer Abbremsung oder einer gleichförmigen Verstellbewegung abhängt.

Aufgrund des Zusammenhangs eines Algorithmus mit einem oder mehreren der physikalischen Effekte weist jeder Algorithmus zudem eine unterschiedliche Selektivität zwischen einer Einklemmkraft und einer Störkraft auf. Um so größer dabei die Fähigkeit eines Algorithmus ist eine Einklemmkraft von einer Störkraft im Unterschied zu einer Störkraft auszuwerten, um so größer ist seine Selektivität. Demzufolge ist das Verhältnis zwischen Nutzsignal und Störsignal für eine hohe Selektivität besonders hoch. In diesem Fall der hohen Selektivität reagiert der Algorithmus sensitiv auf Einklemmereignisse, hingegen unempfindlich gegenüber Störereignissen, wie eine Schwingung des Systems oder ein Auflösungsrauschen des Sensorsignals.

Eine Selektivität SN_{K} der drei Algorithmen für unterschiedliche Verstellphasen I, II, III, IV oder V ist in der Fig. 1 schematisch dargestellt. Beispielsweise ist in der Beschleunigungsphase I die Selektivität SN_{(MTA)} eines Algorithmus der Perioden einer Motorumdrehung des Antriebsmotors auswertet höher als die Selektivität SN_{(MTC)} eines Algorithmus, der die zeitliche Ableitung der Perioden einer Motorumdrehung des Antriebsmotors auswertet. Anhand dieses beispielsweise empirisch ermittelten Selektivitätsunterschieds wird in der Verstellphase I der Algorithmus, der die zeitliche Ableitung der Perioden einer Motorumdrehung des Antriebsmotors auswertet, unempfindlicher gesetzt und hierzu beispielsweise einfach deaktiviert. Ein Fehlreversieren aufgrund einer fehlerhaften Detektion durch den Algorithmus, der die zeitliche Ableitung der Perioden einer Motorumdrehung des Antriebsmotors auswertet, wird hierdurch vermieden. Ähnliches gilt für die Verstellphase III, in der ebenfalls der Algorithmus der die zeitliche Ableitung der Perioden einer Motorumdrehung des Antriebsmotors auswertet, eine geringere Selektivität aufweist, so daß dieser in der Abbremsphase III ebenfalls in der Empfindlichkeit reduziert ist, indem beispielsweise Parameter des Algorithmus entsprechend gesetzt werden.

In der Gleichlaufphase II hingegen weist der Algorithmus, der die zeitliche Ableitung der Perioden einer Motorumdrehung des Antriebsmotors auswertet, eine hinreichend gute Selektivität auf. Zudem weist dieser Algorithmus eine hohe Empfindlichkeit für schnelle Kraftänderungen in einem Einklemmfall auf, so daß dieser Algorithmus nun parallel zum Algorithmus, der Perioden einer Motorumdrehung des Antriebsmotors auswertet, verwendet wird.

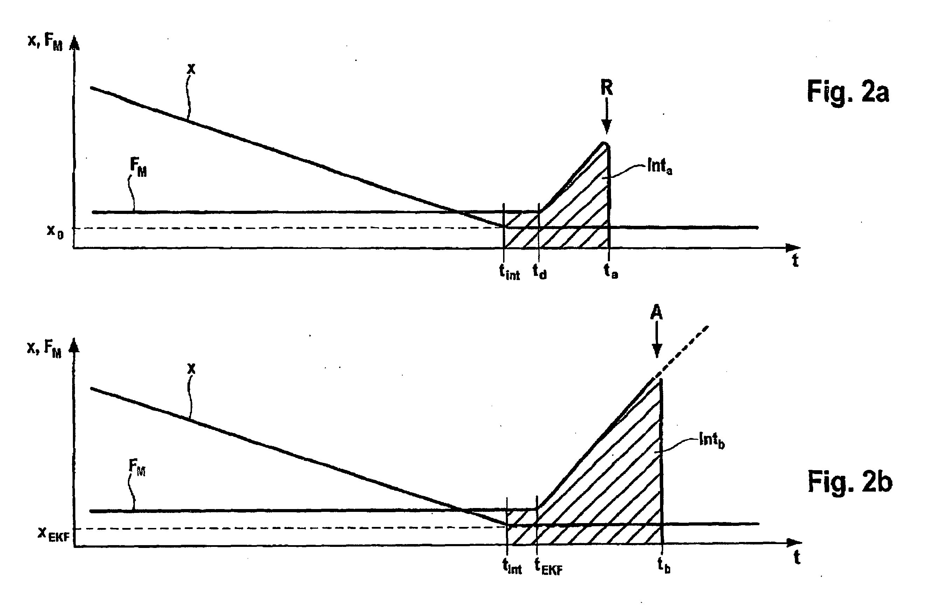

In der Verstellphase V kann aufgrund der teilweise sehr geringen Geschwindigkeit weder der Algorithmus, der Perioden einer Motorumdrehung des Antriebsmotors auswertet, noch der Algorithmus, der die zeitliche Ableitung der Perioden einer Motorumdrehung des Antriebsmotors auswertet, verwendet werden. Hier wird ein dritter Algorithmus verwendet, der anhand der Figuren 2a und 2b näher erläutert wird. Die die Motorumdrehung berücksichtigenden Algorithmen werden deaktiviert.

Die Erfindung ist dabei nicht auf die zuvor genannten Algorithmen oder Sensorsignale begrenzt. Beispielsweise kann eine Transformation in den Frequenzbereich als Algorithmus verwendet werden. Weiterhin wird vorteilhafterweise als Sensorsignal ein Motorstrom, beispielsweise dessen durch mechanische Kommutierung bedingte Welligkeit, zur Detektion eines Einklemumfalles ausgewertet.

In Fig. 2a ist ein schematisches Diagramm mit einer vom Motor erzeugten Kraft F_{M} und einem Verstellweg x über die Verstellzeit t für ein normales Schließen einer Heckklappe gezeigt. Dabei erfolgt eine im linken Bereich des Diagramms dargestellte Verstellbewegung in der eine Verstellposition x sich der Schließposition x₀ als Zielposition nähert. Die vom Motor erzeugte Kraft F_{M} ist zum Verstellzeitpunkt t_{d} als im Wesentlichen konstant dargestellt, kann je nach Schwergängigkeit der Verstellung jedoch auch variieren.

Im Verstellzeitpunkt t_{d} beginnt die Heckklappe in eine an der Kraftfahrzeugkarosserie befestigten Dichtung einzulaufen. Nachfolgend steigt die Kraft F_{M} an, wobei der Kraftanstieg durch Elastizitäten beispielsweise der Dichtung und durch den Regler beeinflußt ist. Ein Einklemmschutzalgorithmus integriert die Fläche unter der Kraftkurve. Bevor jedoch ein Integralwert Intₐ einen Integralschwellwert überschreitet, wird im Zeitpunkt tₐ ein Rasten in einer Schloßraste erkannt. Ein Motorstrom wird aufgrund dieses Ereignisses R abgeschaltet und der Integralwert Intₐ auf Null zurückgesetzt.

In Abweichung zu Fig. 2a ist in Fig. 2b ein schematisches Diagramm für einen Einklemmfall dargestellt. Wiederum sind der Verstellweg x und die vom Motor erzeugte Kraft F_{M} über der Verstellzeit t dargestellt. Zum Verstellzeitpunkt tᵢₙₜ unterschreitet eine Drehzahl des Motors (in Fig. 2b nicht dargestellt) eine Schwellgeschwindigkeit. Ab diesem Zeitpunkt beginnt der Einklemmschutzalgorithmus die Kraft F_{M} über die Verstellzeit t zu integrieren. Der Integralschwellwert Int_{b} wird dabei fortlaufend mit dem Integralschwellwert verglichen.

Da die Heckklappe auf dem eingeklemmten Hindernis aufliegt, kann die Heckklappe nicht in die Dichtung einlaufen. Dieser Einklemmfall führt zu einem erhöhten Kraftanstieg ab dem Verstellzeitpunkt t_{EKF}. Zum Verstellzeitpunkt t_{b} überschreitet der Integralwert Intₕ den Integralschwellwert. Dieses Ereignis A bewirkt, daß der Motorstrom abgeschalten wird. Ebenfalls ist es möglich den Motor in die Gegenrichtung zu bestromen, so daß das einklemmte Objekt wieder frei gegeben wird.

Während der Einklemmschutzalgorithmus integriert, ist die Drehzahl des Motors so niedrig, daß die Drehzahl nicht zur Ermittlung der Motorkraft F_{M} genutzt werden kann. Im Einklemmschutzalgorithmus wird daher ein Stellsignal des Reglers integriert, wobei das Stellsignal - beispielsweise ein Puls-Weiten-Verhältnis - zu der vom Motor erzeugten Kraft F_{M} korreliert.

Es wurde weiter oben erläutert, daß beispielsweise bei einer niedrigen Versorgungsspannung die Sollgeschwindigkeit derart reduziert wird, daß stets eine Regelreserve verbleibt. Es wurde auch erläutert, daß dieser Grundgedanke als solcher Gegenstand einer weiteren Lehre ist, bei der es auf die obige Realisierung mehrerer Verstellphasen nicht unbedingt ankommt.

Auch nach dieser weiteren Lehre wird eine Verstellbewegung eines Verstellteils geregelt, wobei zur Regelung eine Sollgeschwindigkeit bestimmt, eine Istgeschwindigkeit gemessen und die Istgeschwindigkeit mit der Sollgeschwindigkeit verglichen wird.

Wesentlich ist nunmehr, daß vorzugsweise permanent mindestens eine zum Zustand des Verstellsystems korrelierende Größe mittels eines Umgebungssensors gemessen wird. Wesentlich ist weiter, daß die Sollgeschwindigkeit in Abhängigkeit von der gemessenen Größe bzw. von den gemessenen Größen derart angepaßt wird, daß stets die oben genannte Regelreserve verbleibt. Dabei wird es sich in der Regel um ein Reduzieren der Sollgeschwindigkeit aufgrund von verstellungshemmenden Umgebungsgrößen handeln. Grundsätzlich kann es aber auch vorgesehen sein, daß die Sollgeschwindigkeit hochgesetzt wird, sofern die gewünschte Regelreserve sichergestellt ist.

In besonders bevorzugter Ausgestaltung ist es vorgesehen, daß eine konstante Regelreserve verbleibt. Beispielsweise ist es denkbar, daß eine Regelreserve von 5 % über den gesamten Verstellvorgang beibehalten wird.

Im einzelnen ist es vorzugsweise so, daß aus der jeweils gemessenen Größe ein Einzel-Korrekturparameter für die Sollgeschwindigkeit ermittelt wird. Das Produkt aus Einzel-Korrekturparameter und - ursprünglicher - Sollgeschwindigkeit ergibt dann die resultierende Sollgeschwindigkeit. Wie oben erläutert, kann der Einzel-Korrekturparameter Werte größer 1 und kleiner 1 annehmen.

Besonders vorteilhaft ist eine Ausgestaltung, bei der mehrere der Anpassung der Sollgeschwindigkeit zugrundeliegende Größen gemessen werden und bei der aus den ermittelten Einzel-Korrekturparametern ein Gesamt-Korrekturparameter für die Sollgeschwindigkeit ermittelt wird. Dabei gehen in die Ermittlung des Gesamt-Korrekturparameters die jeweiligen Einzel-Korrekturparameter vorzugsweise gewichtet ein.

Es sind im obigen Zusammenhang eine Reihe den Betrieb des Verstellsystems beeinflussender Größen denkbar.

In bevorzugter Ausgestaltung wird als der Anpassung der Sollgeschwindigkeit zugrundeliegende Größe die aktuelle Temperatur des Verstellsystems und/oder der Umgebung des Verstellsystems gemessen. Die Temperatur des Verstellsystems und/oder der Umgebung des Verstellsystems hat Auswirkungen auf die Kennlinie von Antriebsmotoren, auf die Nachgiebigkeit von elastischen Elementen, auf die Viskosität von Schmiermitteln etc. und ist somit eine gewichtige Einflußgröße für den Betrieb des Verstellsystems. Versuche haben ergeben, daß das Überschreiten einer oberen Grenztemperatur und das Unterschreiten einer unteren Grenztemperatur jeweils eine hemmende Wirkung auf das Verstellsystem haben. Daher ist es vorzugsweise vorgesehen, daß der aus der gemessenen Temperatur ermittelte Einzel-Korrekturfaktor oberhalb einer oberen Grenztemperatur und unterhalb einer unteren Grenztemperatur absinkt.

Eine weitere gewichtige Einflußgröße ist die aktuelle Versorgungsspannung des Kraftfahrzeugs. Daher ist es weiter vorzugsweise vorgesehen, daß alternativ oder zusätzlich als der Anpassung der Sollgeschwindigkeit zugrundeliegende Größe die aktuelle Versorgungsspannung des Kraftfahrzeugs gemessen wird, wobei sich der aus der gemessenen Versorgungsspannung ermittelte Einzel-Korrekturfaktor mit der Versorgungsspannung vorzugsweise linear ändert.

Grundsätzlich ist es auch denkbar, daß ein entsprechender Einzel-Korrekturfaktor aus der gemessenen Verstellzeit ermittelt wird. Hierfür ist ein separater Sensor selbstredend nicht erforderlich.

Ein weiterer gewichtiger Einflußfaktor ist schließlich eine ggf. vorhandene Hanglage des Kraftfahrzeugs. Vorzugsweise wird alternativ oder zusätzlich als der Anpassung der Sollgeschwindigkeit zugrundeliegende Größe die Hanglage des Kraftfahrzeugs gemessen, wobei sich der aus der gemessenen Hanglage ermittelte Einzel-Korrekturfaktor mit der Versorgungsspannung wieder vorzugsweise linear ändert.

Es wurde im allgemeinen Teil der Beschreibung erläutert, daß die oben beschriebene Bereitstellung einer Regelreserve besonders vorteilhaft ist, wenn während der Regelung in Abhängigkeit von der Istgeschwindigkeit ein Einklemmfall ermittelt werden soll. Die Kombination der Bereitstellung einer Regelreserve mit einer solchen Einklemmfallerkennung ist daher besonders vorteilhaft. Mit "Istgeschwindigkeit" sind dabei alle Größen gemeint, die irgendwie mit der Istgeschwindigkeit korrelieren.

Das Verstellsystem mit der beschriebenen Regelreserve wird als solches beansprucht, wobei es wie erläutert auf die Realisierung mehrerer Verstellphasen nicht unbedingt ankommt. Es darf allerdings darauf hingewiesen werden, daß die obige Bereitstellung einer Regelreserve mit allen oben beschriebenen Varianten eines Verstellsystems bzw. eines Verstellsystems vorteilhaft kombiniert werden kann. Insoweit darf in vollem Umfange auf die obigen Ausführungen verwiesen werden.

Es darf ferner darauf hingewiesen werden, daß bei den voranstehenden Erläuterungen mit "Sollgeschwindigkeit" nicht nur die Geschwindigkeit des Verstellteils, sondern auch die Motorgeschwindigkeit oder die Geschwindigkeit eines im Antriebsstrang befindlichen Teils gemeint sein kann. Es sind nämlich Verstellsysteme denkbar, bei denen der Zusammenhang zwischen der Motordrehzahl und der Geschwindigkeit des Verstellteils nicht linear ist. Entsprechend ergeben sich auch unterschiedliche Geschwindigkeitsverläufe, so daß eine Unterscheidung zwischen den obigen Geschwindigkeiten, jedenfalls zwischen der Motordrehzahl und der Geschwindigkeit des Verstellteils, notwendig ist. Alle obigen Ausführungen treffen für jede dieser Geschwindigkeiten für sich genommen zu.

Schließlich darf darauf hingewiesen werden, daß die beschriebenen Verfahren zum Betrieb der vorschlagsgemäßen Verstellsysteme jeweils als solche beanspruchbar sein sollen. Insoweit darf auf die obigen Ausführungen verwiesen werden.

## Patentansprüche

1. Verstellsystem eines Kraftfahrzeugs, insbesondere eine Heckklappe, mit einem Antrieb zur Verstellung eines Verstellteils,
mit einem Treiber, der zur Bestromung des Antriebs mit dem Antrieb verbunden ist,
mit einem Sensor zur Messung einer Istgeschwindigkeit des Antriebs,
mit einer Recheneinheit, die mit dem Treiber und mit dem Sensor verbunden und eingerichtet ist
- eine Verstellbewegung eines Verstellteils zu regeln,
- zur Regelung eine Istgeschwindigkeit mit einer Sollgeschwindigkeit zu vergleichen,
- die Sollgeschwindigkeit von einer Startposition zu einer Zielposition durch eine Sollfunktion mit einer Anzahl von Verstellphasen zu bestimmen,
- während der Regelung in Abhängigkeit von einer von der Verstellbewegung abhängigen Meßgröße und/oder einer Regelgröße der Regelung einen Einklemmfall zu ermitteln,
**dadurch gekennzeichnet, dass**
- die Recheneinheit zur Ermittlung des Einklemmfalls zumindest zwei Algorithmen aufweist,
- die Recheneinheit eingerichtet ist innerhalb zumindest einer Verstellphase einen der zumindest zwei Algorithmen unempfindlicher zu setzen.

2. Verstellsystem nach Anspruch 1, bei dem
- die zumindest zwei Algorithmen innerhalb zumindest einer Verstellphase eine unterschiedliche Selektivität zwischen einer Einklemmkraft und einer Störkraft aufweisen,
- die Recheneinheit eingerichtet ist denjenigen der Algorithmen mit der kleineren Selektivität unempfindlicher im Verhältnis zu dem Algorithmus mit der größeren Selektivität zu setzen.

3. Verstellsystem nach Anspruch 2, bei dem zur Setzung der Unempfindlichkeit die Recheneinheit eingerichtet ist denjenigen Algorithmus mit der kleineren Selektivität innerhalb derjenigen Verstellphase zu deaktivieren.

4. Verstellsystem nach einem der Ansprüche 1 bis 3, bei dem die Recheneinheit eingerichtet ist den Algorithmus in Abhängigkeit von zumindest einer Verstellposition unempfindlicher zu setzen.

5. Verstellsystem nach einem der vorhergehenden Ansprüche, wobei die Recheneinheit eingerichtet ist
- die Sollgeschwindigkeit oder den Verlauf der Sollgeschwindigkeit innerhalb mindestens einer Verstellphase in Abhängigkeit von der Startposition und/oder der Zielposition zu bestimmen.

6. Verstellsystem nach Anspruch 5, bei dem die Sollfunktion
- eine Beschleunigungsphase,
- eine an die Beschleunigungsphase anschließende Gleichlaufphase,
- eine an die Gleichlaufphase anschließende Abbremsphase und
- eine an die Abbremsphase anschließende Langsamlaufphase aufweist.

7. Verstellsystem nach Anspruch 5 oder 6, bei dem die Recheneinheit eingerichtet ist die Sollgeschwindigkeit zumindest einer Verstellphase und/oder der Verlauf der Sollgeschwindigkeit zumindest einer Verstellphase und/oder die Sollfunktion in Abhängigkeit von einer zum Zustand des Verstellsystems korrelierenden Größe, insbesondere eine aktuelle Temperatur des Verstellsystems, eine Versorgungsspannung, eine Verstelldauer oder eine Sensierung einer Hanglage des Kraftfahrzeugs, zu bestimmen.

8. Verstellsystem nach einem der Ansprüche 5 bis 7, mit einer Mechanik mit einem Feder-Masse-System, das zu Schwingen neigt, wobei die Recheneinheit eingerichtet ist
- innerhalb einer Abbremsphase als Verstellphase die Sollfunktion als fallende Funktion hin zu einer Minimalsollgeschwindigkeit (als Teil der Sollfunktion) zu bestimmen, und
- die fallende Funktion der Abbremsphase in Abhängigkeit von dem Feder-Masse-Systems und einer Sollgeschwindigkeit zu Beginn der Abbremsphase derart zu bestimmen, daß durch die fallende Funktion der Abbremsphase ein Überschwingen des Feder-Masse-Systems derart bedämpft ist, daß vor der Zielposition die Istgeschwindigkeit die Minimalgeschwindigkeit erreicht.

9. Verstellsystem nach Anspruch 8, bei dem die Recheneinheit eingerichtet ist die Steilheit der Funktion der Abbremsphase in Abhängigkeit von der Sollgeschwindigkeit zu Beginn der Abbremsphase zu bestimmen, so daß für eine höhere Sollgeschwindigkeit eine Steilheit der Funktion geringer ist und für eine geringere Sollgeschwindigkeit eine Steilheit der Funktion höher ist.

10. Verstellsystem nach einem der vorhergehenden Ansprüche, mit einer Mechanik mit einem Feder-Masse-System, das zu Schwingen neigt,
wobei die Recheneinheit eingerichtet ist
- innerhalb einer Beschleunigungsphase als Verstellphase die Sollfunktion als steigende Funktion hin zu einer Gleichlaufgeschwindigkeit zu bestimmen,
- die steigende Funktion der Beschleunigungsphase in Abhängigkeit von dem Feder-Masse-Systems und einer Sollgeschwindigkeit zu Beginn der Beschleunigungsphase derart zu bestimmen, daß durch die steigende Funktion der Beschleunigungsphase ein Überschwingen des Feder-Masse-Systems bedämpft ist, so daß vorzugsweise Schwingungen des Verstellteils durch das Auge nicht wahrnehmbar sind.

11. Verstellsystem nach einem der vorhergehenden Ansprüche, wobei die Recheneinheit eingerichtet ist
- die Istgeschwindigkeit mit einer Schwellgeschwindigkeit zu vergleichen,
- eine Stellgröße der Regelung zu integrieren, wenn die Istgeschwindigkeit die Schwellgeschwindigkeit unterschreitet, wobei die Stellgröße zu einer zum Motor zugeführten Leistung zugeordnet ist,
- den Motor zu stoppen oder eine Verstellrichtung umzukehren, wenn das Integral der Stellgröße einen Integralschwellwert überschreitet.

12. Verstellsystem nach Anspruch 11, bei dem die Recheneinheit eingerichtet ist die Schwellgeschwindigkeit in Abhängigkeit von einer zum Zustand des Verstellsystems korrelierenden Größe, insbesondere einer Temperatur, einer Versorgungsspannung, einer Federsteifigkeit einer Verstellmechanik des Verstellsystems oder einer Sollgeschwindigkeit, zu verändern.

13. Verstellsystem nach einem der vorhergehenden Ansprüche, wobei die Recheneinheit eingerichtet ist
- zur Regelung eine Sollgeschwindigkeit zu bestimmen, eine Istgeschwindigkeit zu messen und die Istgeschwindigkeit mit der Sollgeschwindigkeit zu vergleichen,
- mindestens eine zum Zustand des Verstellsystems korrelierende Größe mittels eines Umgebungssensors zu messen,
- die Sollgeschwindigkeit in Abhängigkeit von der gemessenen Größe bzw. von den gemessenen Größen derart anzupassen, daß stets eine, vorzugsweise konstante, Regelreserve verbleibt.

14. Verstellsystem nach Anspruch 13, bei dem die Recheneinheit so eingerichtet ist, daß aus der jeweils gemessenen Größe ein Einzel-Korrekturparameter für die Sollgeschwindigkeit ermittelt wird, vorzugsweise, bei dem die Recheneinheit so eingerichtet ist, daß mehrere der Anpassung der Sollgeschwindigkeit zugrundeliegenden Größen gemessen werden und daß aus den ermittelten Einzel-Korrekturparametern ein Gesamt-Korrekturparameter für die Sollgeschwindigkeit ermittelt wird, weiter vorzugsweise, bei dem die Recheneinheit so eingerichtet ist, daß in die Ermittlung des Gesamt-Korrekturparameters die jeweiligen Einzel-Korrekturparameter gewichtet eingehen.

15. Verstellsystem nach Anspruch 13 oder 14, bei dem die Recheneinheit so eingerichtet ist, daß als der Anpassung der Sollgeschwindigkeit zugrundeliegende Größe die aktuelle Temperatur des Verstellsystems und/oder der Umgebung des Verstellsystems gemessen wird, vorzugsweise, daß der aus der gemessenen Temperatur ermittelte Einzel-Korrekturfaktor oberhalb einer oberen Grenztemperatur und unterhalb einer unteren Grenztemperatur absinkt, und/oder, bei dem die Recheneinheit so eingerichtet ist, daß als der Anpassung der Sollgeschwindigkeit zugrundeliegende Größe die aktuelle Versorgungsspannung des Kraftfahrzeugs gemessen wird, vorzugsweise, daß sich der aus der gemessenen Versorgungsspannung ermittelte Einzel-Korrekturfaktor mit der Versorgungsspannung linear ändert, und/oder, bei dem die Recheneinheit so eingerichtet ist, daß als der Anpassung der Sollgeschwindigkeit zugrundeliegende Größe die Hanglage des Kraftfahrzeugs gemessen wird, vorzugsweise, daß sich der aus der gemessenen Hanglage ermittelte Einzel-Korrekturfaktor mit der Versorgungsspannung linear ändert.

16. Verstellsystem nach einem der vorhergehenden Ansprüche, bei dem die Recheneinheit so eingerichtet ist, daß während der Regelung in Abhängigkeit von einer von der Verstellbewegung abhängigen Meßgröße, vorzugsweise von der Istgeschwindigkeit, und/oder einer Regelgröße der Regelung ein Einklemmfall ermittelt wird.

17. Steuerungsvorrichtungmit einer Recheneinheit, wobei die Recheneinheit mit Funktionen für den Betrieb eines Verstellsystems eingerichtet ist,
**dadurch gekennzeichnet,**
**dass** die Recheneinheit mit einem Verstellsystem nach einem der vorhergehenden Ansprüche eingerichtet ist.

## Claims

1. Adjustment system of a motor vehicle, in particular a tailgate, having a drive for adjusting an adjustment part,
having a driver unit which is connected to the drive in order to supply power to the drive,
having a sensor for measuring an actual speed of the drive,
having a computer unit which is connected to the driver unit and to the sensor and is designed
- to regulate an adjusting movement of an adjustment part,
- to compare an actual speed with a setpoint speed for regulation purposes,
- to determine the setpoint speed from a start position to a destination position using a setpoint function with a number of adjustment phases,
- to ascertain a trapping event as a function of a measurement variable which is dependent on the adjusting movement and/or a regulating variable of the regulation operation during the regulation operation,
**characterized in that**
- the computer unit has at least two algorithms for ascertaining the trapping event,
- the computer unit is designed to set one of the at least two algorithms to be less sensitive within at least one adjustment phase.

2. Adjustment system according to Claim 1, in which
- the at least two algorithms have a different selectivity between a trapping force and an interference force within at least one adjustment phase,
- the computer unit is designed to set that one of the algorithm with the lower selectivity to be less sensitive than the algorithm with the greater selectivity.

3. Adjustment system according to Claim 2, in which the computer unit is designed to deactivate that algorithm with the lower selectivity within that adjustment phase in order to set the insensitivity.

4. Adjustment system according to one of Claims 1 to 3, in which the computer unit is designed to set the algorithm to be less sensitive as a function of at least one adjustment position.

5. Adjustment system according to one of the preceding claims, wherein the computer unit is designed
- to determine the setpoint speed or the profile of the setpoint speed within at least one adjustment phase as a function of the start position and/or the destination position.

6. Adjustment system according to Claim 5, in which the setpoint function has
- an acceleration phase,
- a synchronized phase which follows the acceleration phase,
- a braking phase which follows the synchronized phase, and
- a low-speed phase which follows the braking phase.

7. Adjustment system according to Claim 5 or 6, in which the computer unit is designed to determine the setpoint speed at least of an adjustment phase and/or the profile of the setpoint speed at least of an adjustment phase and/or the setpoint function as a function of a variable which is correlated with the state of the adjustment system, in particular an existing temperature of the adjustment system, a supply voltage, an adjustment period or detection of the motor vehicle being on a slope.

8. Adjustment system according to one of Claims 5 to 7, having a mechanism with a spring-mass system which tends to oscillate, wherein the computer unit is designed
- to determine the setpoint function as a falling function to a minimum setpoint speed (as part of the setpoint function) within a braking phase as an adjustment phase, and
- to determine the falling function of the braking phase as a function of the spring-mass system and a setpoint speed at the beginning of the braking phase in such a way that excess oscillation of the spring-mass system is damped by the falling function of the braking phase in such a way that the actual speed reaches the minimum speed before the destination position.

9. Adjustment system according to Claim 8, in which the computer unit is designed to determine the gradient of the function of the braking phase as a function of the setpoint speed at the beginning of the braking phase, and therefore a gradient of the function is lower for a relatively high setpoint speed and a gradient of the function is higher for a relatively low setpoint speed.

10. Adjustment system according to one of the preceding claims, having a mechanism with a spring-mass system which tends to oscillate, wherein the computer unit is designed
- to determine the setpoint function as a rising function to a synchronized speed within an acceleration phase as an adjustment phase, and
- to determine the rising function of the acceleration phase as a function of the spring-mass system and a setpoint speed at the beginning of the acceleration phase in such a way that excess oscillation of the spring-mass system is damped by the rising function of the acceleration phase, and therefore oscillation of the adjustment part is preferably not perceptible to the eye.

11. Adjustment system according to one of the preceding claims, wherein the computer unit is designed
- to compare the actual speed with a threshold speed,
- to integrate an actuating variable of the regulation operation when the actual speed falls below the threshold speed, wherein the actuating variable is associated with a power which is supplied to the motor,
- to stop the motor or to reverse an adjustment direction when the integral of the actuating variable exceeds an integral threshold value.

12. Adjustment system according to Claim 11, in which the computer unit is designed to change the threshold speed as a function of a variable which is correlated with the state of the adjustment system, in particular a temperature, a supply voltage, a spring stiffness of an adjustment mechanism of the adjustment system or a setpoint speed.

13. Adjustment system according to one of the preceding claims, wherein the computer unit is designed
- to determine a setpoint speed, to measure an actual speed and to compare the actual speed with the setpoint speed for regulation purposes,
- to measure at least one variable, which is correlated with the state of the adjustment system, by means of an environment sensor,
- to adapt the setpoint speed as a function of the measured variable or of the measured variables in such a way that a, preferably constant, regulation reserve always remains.

14. Adjustment system according to Claim 13, in which the computer unit is designed such that an individual correction parameter for the setpoint speed is ascertained from the respectively measured variable, preferably in which the computer unit is designed such that a plurality of variables on which the adaptation of the setpoint speed is based are measured, and that an overall correction parameter for the setpoint speed is ascertained from the ascertained individual correction parameters, further preferably in which the computer unit is designed such that the respective individual correction parameters are included in the operation for ascertaining the overall correction parameter in a weighted fashion.

15. Adjustment system according to Claim 13 or 14, in which the computer unit is designed such that the existing temperature of the adjustment system and/or of the area surrounding the adjustment system is measured as the variable on which the adaptation operation for the setpoint speed is based, preferably that the individual correction factor which is ascertained from the measured temperature rises above an upper limit temperature and falls below a lower limit temperature, and/or in which the computer unit is designed such that the existing supply voltage of the motor vehicle is measured as the variable on which the adaptation operation for the setpoint speed is based, preferably that the individual correction factor which is ascertained from the measured supply voltage changes linearly with the supply voltage, and/or in which the computer unit is designed such that the situation of the motor vehicle being on a slope is measured as the variable on which the adaptation operation for the setpoint speed is based, preferably that the individual correction factor which is ascertained from the measured situation of the motor vehicle being on a slope changes linearly with the supply voltage.

16. Adjustment system according to one of the preceding claims, in which the computer unit is designed such that a trapping event is ascertained as a function of a measurement variable which is dependent on the adjusting movement, preferably on the actual speed, and/or a regulating variable of the regulation operation during the regulation operation.

17. Control apparatus having a computer unit, wherein the computer unit is designed with functions for operating an adjustment system,
**characterized in that**
the computer unit is designed with an adjustment system according to one of the preceding claims.

## Revendications

1. Système de réglage d'un véhicule à moteur, notamment d'un haillon, comprenant un actionneur pour le réglage d'une partie de réglage,
comprenant un pilote qui est connecté à l'actionneur pour alimenter en courant l'actionneur, comprenant un capteur pour mesurer une vitesse réelle de l'actionneur,
comprenant une unité de calcul qui est connectée au pilote et au capteur et qui est conçue pour :
- commandeur le déplacement de réglage d'une partie de réglage
- comparer une vitesse réelle à une vitesse de consigne pour la commande,
- déterminer la vitesse de consigne d'une position de départ à une position cible au moyen d'une fonction de consigne comprenant un certain nombre de phases de réglage,
- déterminer pendant la commande une situation de serrage pendant la commande en fonction d'une variable de mesure dépendant du déplacement de réglage et/ou d'une variable de commande de la commande,
**caractérisé en ce que**
- l'unité de calcul comprend au moins deux algorithmes destinés à déterminer une situation de serrage,
- l'unité de calcul est conçue pour faire passer pendant au moins une phase de réglage l'un des au moins deux algorithmes dans un état insensible.

2. Système de réglage selon la revendication 1, dans lequel
- les au moins deux algorithmes présentent pendant au moins une phase de réglage une sélectivité différente entre une force de serrage et une force de perturbation,
- l'unité de calcul est conçue pour faire passer celui des algorithmes présentant la sélectivité la plus faible dans un état inactif par rapport à l'algorithme présentant la sélectivité la plus grande.

3. Système de réglage selon la revendication 2, dans lequel, pour déclencher l'insensibilité, l'unité de calcul est conçue pour désactiver celui des algorithmes qui présente la sélectivité la plus faible pendant la phase de réglage correspondante.

4. Système de réglage selon l'une des revendications 1 à 3, dans lequel l'unité de calcul est conçue pour faire passer l'algorithme dans un état insensible en fonction d'au moins une position de réglage.

5. Système de réglage selon l'une des revendications précédentes, dans lequel l'unité de calcul est conçue pour :
- déterminer la vitesse de consigne ou l'évolution de la vitesse de consigne pendant au moins une phase de réglage en fonction de la position de départ et/ou de la position cible.

6. Système de réglage selon la revendication 5, dans lequel la fonction de consigne Comprend :
- une phase d'accélération,
- une phase à vitesse constante faisant suite à la phase d'accélération,
- une phase de décélération faisant suite à la phase à vitesse constante, et
- une phase à vitesse lente faisant suite à la phase de décélération.

7. Système de réglage selon la revendication 5 ou 6, dans lequel l'unité de calcul est conçue pour déterminer la vitesse de consigne d'au moins une phase de réglage et/ou l'évolution de la vitesse de consigne d'au moins une phase de réglage et/ou la fonction de consigne en fonction d'une variable corrélée à l'état du système de réglage, notamment une température courante du système de réglage, une tension d'alimentation, une durée de réglage ou une détection d'une pente du véhicule à moteur.

8. Système de réglage selon les revendications 5 à 7, comprenant un mécanisme avec système de ressort-masse ayant tendance à osciller, dans lequel l'unité de calcul est conçue pour :
- estimer, pendant une phase de décélération constituant la phase de réglage, la fonction de consigne sous la forme d'une fonction décroissant vers une vitesse de consigne minimale (en tant que partie de la fonction de consigne), et
- déterminer la fonction décroissante de la phase de décélération en fonction, du système de ressort-masse et d'une vitesse de consigne au début de la phase de décélération, de telle manière qu'une sur-oscillation du système de ressort-masse soit amortie par la fonction décroissante de la phase de décélération, afin que la vitesse réelle atteigne la vitesse minimale avant la position cible.

9. Système de réglage selon la revendication 8, dans lequel l'unité de calcul est conçue pour déterminer la pente de la fonction de la phase de décélération en fonction de la vitesse de consigne au début de la phase de décélération, de telle manière que, pour une vitesse de consigne plus élevée, la pente de la fonction soit plus faible et que pour une vitesse de consigne plus faible, la pente de la fonction soit plus élevée.

10. Système de réglage selon l'une des revendications précédentes, comprenant un mécanisme à système de ressort-masse ayant tendance à osciller, dans lequel l'unité de calcul est conçue pour :
- déterminer, pendant une phase d'accélération constituant la phase de réglage, la fonction de consigne sous la forme d'une fonction croissant jusqu'à une vitesse constante,
- déterminer la fonction, croissante de la phase d'accélération en fonction du système de ressort-masse et d'une vitesse de consigne au début de la phase d'accélération, de telle manière qu'une sur-oscillation du système de ressort-masse soit amortie par la fonction croissante de la phase d'accélération, afin que les oscillations de la partie de réglage ne soient de préférence pas visibles à l'oeil.

11. Système de réglage selon l'une des revendications précédentes, dans lequel l'unité de calcul est conçue pour
- comparer la vitesse réelle à une vitesse de seuil,
- intégrer une variable de réglage de la commande lorsque la vitesse réelle est inférieure à la vitesse de seuil, la variable de réglage étant associée à une puissance fournie au moteur,
- arrêter le moteur ou inverser une direction de réglage lorsque l'intégrale de la variable de réglage dépasse une valeur de seuil.

12. Système de réglage selon la revendication 11, dans lequel l'unité de calcul est conçue pour modifier la vitesse de seuil en fonction d'une variable corrélée à l'état du système de réglage, notamment d'une température, d'une tension d'alimentation, d'une raideur du ressort d'un mécanisme de réglage du système de réglage ou d'une vitesse de consigne.

13. Système de réglage selon l'une des revendications précédentes, dans lequel l'unité de calcul est conçue pour :
- déterminer une vitesse de consigne pour la commande, mesurer une vitesse réelle et comparer la vitesse réelle à la vitesse de consigne,
- mesurer au moins une variable corrélée à l'état du système au moyen d'un capteur d'environnement, ajuster la vitesse de consigne en fonction de la variable mesurée ou des variables mesurées de telle manière qu'il reste toujours une réserve de commande de préférence constante.

14. Système de réglage selon la revendication 13, dans lequel l'unité de calcul est conçue de telle manière que, à partir de la variable mesurée respective, un paramètre de correction individuel soit obtenu pour la vitesse de consigne, dans lequel, de préférence, l'unité de calcul est conçue de telle manière que plusieurs variables intervenant dans l'ajustement de la vitesse de consigne soient mesurées et qu'à partir des paramètres de correction individuels obtenus, un paramètre de correction global soit obtenu pour la vitesse de consigne, et dans lequel, de préférence encore, l'unité de calcul est conçue de telle manière que, lors de l'obtention du paramètre de correction global, les paramètres de correction individuels pondérés respectifs soient fournis.

15. Système de réglage selon la revendication 13 ou 14, dans lequel l'unité de calcul est conçue de telle manière que, en tant qu'ajustement de la variable intervenant dans la vitesse de consigne, la température instantanée du système de réglage et/ou de l'environnement du système de réglage soit mesurée, et de préférence, de telle manière que le facteur de correction individuel obtenu à partir de la température mesurée dépasse une température limite supérieure et s'abaisse en dessous d'une température limite inférieure, et/ou dans lequel l'unité de calcul est conçue de telle manière qu'en tant qu'ajustement de la vitesse de la variable intervenant dans la vitesse de consigne, la tension d'alimentation instantanée du véhicule à moteur soit mesurée, de préférence de telle manière que le facteur de correction individuel obtenu à partir de la tension d'alimentation mesurée varie linéairement avec la tension d'alimentation, et/ou dans lequel l'unité de calcul est conçue pour que, la position dans une pente du véhicule à moteur soit mesurée en tant qu'ajustement de la variable intervenant dans la vitesse de consigne, et de préférence de telle manière que le facteur de correction individuel obtenu à partir de la pente mesurée varie linéairement avec la tension d'alimentation.

16. Système de réglage selon les revendications précédentes, dans lequel l'unité de calcul est conçue de telle manière qu'une situation de serrage soit déterminée pendant la commande en fonction de l'une des variables de mesure dépendant du déplacement de réglage, de préférence de la vitesse réelle, et/ou d'une variable de commande de la commande.

17. Dispositif de commande comprenant une unité de calcul, dans lequel l'unité de calcul est dotée de fonctions destinées au pilotage d'un système de réglage, **caractérisé en ce que** l'unité de calcul est munie d'un système de réglage selon l'une des revendications précédentes.
